# EUROPEAN PATENT APPLICATION

(11) **EP 4 283 585 A1**
(43) Date of publication of application: **29.11.2023**
(21) Application number: 23175352.6
(22) Date of filing: 25.05.2023
(51) Int. Cl.: G08B 13/08, G06Q 10/083

(54) **CHAIN OF CUSTODY PROVENANCE FOR AN AUTONOMOUS VEHICLE**

(30) Priority: 25.05.2022 US 202263345834 P
(71) Applicant: TuSimple, Inc., San Diego, CA 92122 (US)
(72) Inventor: BROWN, Robert Patrick, San Diego, 92122 (US); HAN, Xiaoling, San Diego, 92122 (US)
(74) Representative: Hamer, Thomas Daniel

(57) **Abstract**

An autonomous vehicle (AV) includes features that allows the AV to comply with applicable regulations and statues for safe operation. An AV may operate in conjunction with an oversight system, such as when coordinating a fleet of autonomous vehicles. One aim of AV technologies is to provide vehicles that can safely navigate towards a destination with limited or no driver assistance. AVs or other types of vehicles carrying goods may be subject to theft and other undesired disturbances. Systems, apparatus, and methods are provided to ensure a chain of custody for cargoes in an AV. Numbered seals are attached to the doors of an AV to detect unauthorized door open operations. Unauthorized vehicle stops are also detected based on position tracking information of the AV. Changes in cargo weight can also be detected.

## Description

### TECHNICAL FIELD

The present disclosure relates generally to autonomous vehicles. More particularly, the present disclosure relates to ensuring chain of custody for cargoes in an autonomous vehicle.

### BACKGROUND

One aim of autonomous vehicle technologies is to provide vehicles that can safely navigate towards a destination with limited or no driver assistance. The safe navigation of an autonomous vehicle (AV) from one point to another may include the ability to signal other vehicles, navigating around other vehicles in shoulders or emergency lanes, changing lanes, biasing appropriately in a lane, and navigating all portions or types of highway lanes. Autonomous vehicle technologies may enable an AV to operate without requiring extensive learning or training by surrounding drivers, by ensuring that the AV can operate safely, in a way that is evident, logical, or familiar to surrounding drivers and pedestrians.

### SUMMARY

Autonomous vehicles or other types of vehicles carrying goods may be subject to theft and other undesired disturbances. Systems, apparatuses, and methods are provided to ensure a chain of custody for cargoes in an AV. In some embodiments, numbered seals are attached to the doors of an AV to detect unauthorized door open operations. In further embodiments, unauthorized vehicle stops are also detected based on position tracking information of the AV.

In one example embodiment, seal numbers are digitally stored in storage media of door seals attached to one or more doors of an AV. The door seals may comprise seal sensors to provide status signals to indicate whether an open operation is performed on the one or more doors of the AV. The status signals may be transmitted from the AV to an oversight system for further processing. In this example embodiment, the oversight system may be configured to determine whether an unauthorized open operation is performed at the one or more doors of the AV. If an unauthorized open operation is determined, the oversight system may be configured to send a control signal to turn on one or more cameras mounted on the AV to capture imagery data within and outside the AV. The captured imagery data may be then sent back from the AV to the oversight system for further verification. Upon further verification, the oversight system may be configured to send a pull over request to the AV and dispatch a rescue team for on-site verification.

In another embodiment, the AV comprises a navigation device and a speed sensor to obtain real-time geographic location and speed of the AV. The AV may be configured to transmit the real-time geographic location and speed to the oversight system. Upon receiving the real-time geographic location and speed of the AV, the oversight system may be configured to determine whether an unauthorized stop event occurs at the AV. In this embodiment, the oversight system compares the real-time speed of the AV at the real-time geographic location to a predetermined speed threshold value and determines whether an unauthorized stop occurs. If an unauthorized stop is determined at the oversight system, a control signal may be sent from the oversight system to the AV to turn on the one or more cameras mounted on the AV to capture imagery data within and outside the AV. The captured imagery data may be sent back to the oversight system for further verification. Upon further verification, the oversight system may be configured to send a pull over request to the AV and dispatch a rescue team for on-site verification.

In yet another embodiment, the AV comprises a weight sensor configured to measure a weight value of cargoes in the AV. In some embodiments, cargo weight values can be estimated by observing cargo material type and/or volume of cargo in the AV and/or other physics metrics known in the art. The measured weight value may be transmitted to the oversight system, and the oversight system may be configured to compare the measured weight value to a predetermined weight value to detect cargo weight changes in the AV. If the oversight system determines that an abnormal weight change occurs, a control signal may be sent to turn on the one or more cameras mounted on the AV to capture imagery data within and outside the AV. The captured imagery data may be sent back to the oversight system for further verification. Upon further verification, the oversight system may be configured to send a pull over request to the AV and dispatch a rescue team for on-site verification.

In still another embodiment, the AV may be configured to receive a plurality of checklists from the oversight system. In this embodiment, the plurality of checklists comprises a first checklist comprising one or more cargoes in the AV and a second checklist comprising one or more seal numbers corresponding to one or more door seals associated with one or more vehicle doors. An on-site operator may verify the one or more cargoes on the first checklist and the one or more seal numbers on the second checklist. In some examples, the on-site operator scans Radio Frequency Identification (RFID) tags attached to the one or more cargoes and the one or more door seals for verification. Upon verification, the on-site operator may validate the first checklist and the second checklist by sending a first and a second validation signals to the oversight system.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 illustrates a block diagram of a system including an autonomous vehicle;
FIG. 2 shows a flow diagram for operation of an autonomous vehicle in light of the health and surroundings of the autonomous vehicle;
FIG. 3 illustrates an autonomous vehicle network in accordance with an exemplary embodiment of the present disclosure;
FIG. 4 illustrates an autonomous vehicle cargo verification system, in accordance with an exemplary embodiment of the present disclosure;
FIG. 5 illustrates a door seal comprising a storage medium and a seal sensor, in accordance with an exemplary embodiment of the present disclosure;
FIG. 6 illustrates another embodiment of an autonomous vehicle cargo verification system in accordance with the present disclosure.
FIG. 7 illustrates yet another embodiment of an autonomous vehicle cargo verification system in accordance with the present disclosure.
FIG. 8 illustrates an example method for operating an autonomous vehicle in accordance with the present disclosure.
FIG. 9 illustrates another example method for operating the autonomous vehicle in accordance with the present disclosure.
FIG. 10 illustrated a simplified computer system that can be used to implement various embodiments described and illustrated herein.

### DETAILED DESCRIPTION

Developments in autonomous driving technology have led to a development of semi-trailer trucks that can be autonomously driven to deliver goods to a destination. When a semi-trailer truck is driven to its destination, the semi-trailer truck can experience different driving conditions such as uphill driving, downhill driving, or windy conditions. Through the various driving conditions, the autonomous semi-trailer truck is expected to carry goods from a starting location to a destination by performing safe driving operations and by protecting the goods to avoid theft and other undesired perturbations. The techniques described in this patent document can be used to ensure chain of custody for cargoes in an autonomous vehicle. In an example embodiment, the techniques described herein can detect unauthorized stops and unauthorized door open operations in an autonomous vehicle.

The example headings for the various sections below are used to facilitate the understanding of the disclosed subject matter and do not limit the scope of the claimed subject matter in any way. Accordingly, one or more features of one example section can be combined with one or more features of another example section.

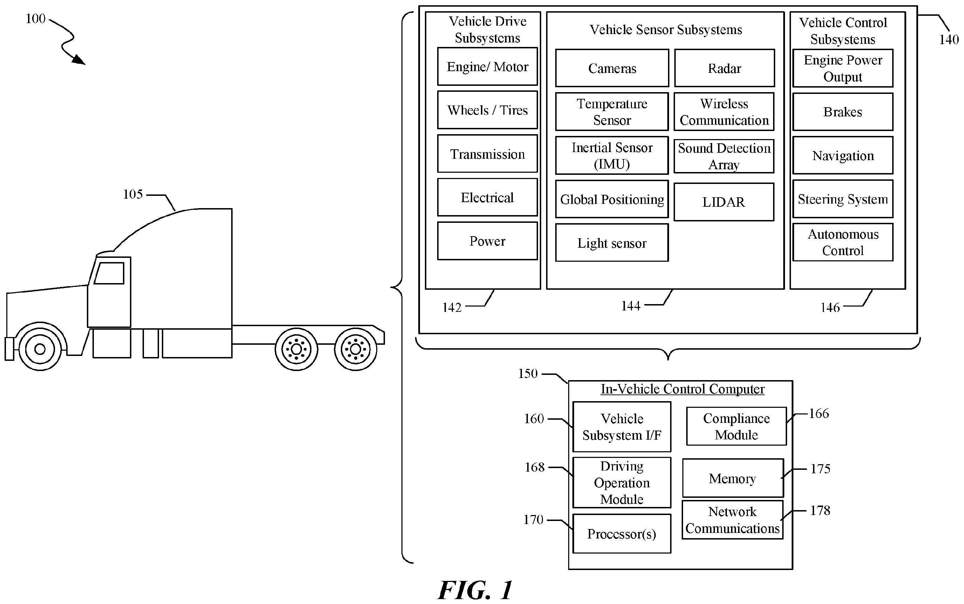

FIG. 1 shows a system 100 that includes an autonomous vehicle 105. An autonomous vehicle may be referred to as a ground vehicle capable of sensing its environment and moving safely with little or no human input. Examples of autonomous vehicles include semi-automated vehicles, autonomous tractor-trailers, autonomous 18 wheelers, autonomous lorries, autonomous class 8 vehicles, autonomous passenger vehicles, autonomous transport vans, autonomous cargo vans, autonomous recreational vehicles, autonomous golf carts, autonomous transport carts, and/or any other types of autonomous vehicles. The autonomous vehicle 105 includes a plurality of vehicle subsystems 140 and an in-vehicle control computer 150. The plurality of vehicle subsystems 140 includes vehicle drive subsystems 142, vehicle sensor subsystems 144, and vehicle control subsystems 146. An engine or motor, wheels and tires, a transmission, an electrical subsystem, and a power subsystem may be included in the vehicle drive subsystems. The engine of the autonomous truck may be an internal combustion engine, a fuel-cell powered electric engine, a battery powered electrical engine, a hybrid engine, or any other type of engine capable of moving the wheels on which the autonomous vehicle 105 moves. The autonomous vehicle 105 may have multiple motors or actuators to drive the wheels of the vehicle, such that the vehicle drive subsystems 142 include two or more electrically driven motors. The transmission may include a continuous variable transmission or a set number of gears that translate the power created by the engine into a force that drives the wheels of the vehicle. The vehicle drive subsystems may include an electrical system that monitors and controls the distribution of electrical current to components within the system, including pumps, fans, and actuators. The power subsystem of the vehicle drive subsystem may include components that regulate the power source of the vehicle.

Vehicle sensor subsystems 144 can include sensors for general operation of the autonomous vehicle 105, including those which would indicate a malfunction in the AV or another cause for an AV to perform a limited or minimal risk condition (MRC) maneuver. The sensors for general operation of the autonomous vehicle may include cameras, a temperature sensor, an inertial sensor (IMU), a global positioning system, a light sensor, a LIDAR system, a radar system, and wireless communications.

A sound detection array, such as a microphone or array of microphones, may be included in the vehicle sensor subsystem 144. The microphones of the sound detection array are configured to receive audio indications of the presence of, or instructions from, authorities, including sirens and command such as "Pull over." These microphones are mounted, or located, on the external portion of the vehicle, specifically on the outside of the tractor portion of an autonomous vehicle 105. Microphones used may be any suitable type, mounted such that they are effective both when the autonomous vehicle 105 is at rest, as well as when it is moving at normal driving speeds.

Cameras included in the vehicle sensor subsystems 144 may be rear-facing so that flashing lights from emergency vehicles may be observed from all around the autonomous vehicle 105. These cameras may include video cameras, cameras with filters for specific wavelengths, as well as any other cameras suitable to detect emergency vehicle lights based on color, flashing, of both color and flashing.

The vehicle control subsystem 146 may be configured to control operation of the autonomous vehicle 105 and its components. Accordingly, the vehicle control subsystem 146 may include various elements such as an engine power output subsystem, a brake unit, a navigation unit, a steering system, and an autonomous control unit. The engine power output may control the operation of the engine, including the torque produced or horsepower provided, as well as provide control of the gear selection of the transmission. The brake unit can include any combination of mechanisms configured to decelerate the autonomous vehicle 105. The brake unit can use friction to slow the wheels in a standard manner. The brake unit may include an Anti-lock brake system (ABS) that can prevent the brakes from locking up when the brakes are applied. The navigation unit may be any system configured to determine a driving path or route for the autonomous vehicle 105. The navigation unit may additionally be configured to update the driving path dynamically while the autonomous vehicle 105 is in operation. In some embodiments, the navigation unit may be configured to incorporate data from the GPS device and one or more predetermined maps so as to determine the driving path for the autonomous vehicle 105. The steering system may represent any combination of mechanisms that may be operable to adjust the heading of the autonomous vehicle 105 in an autonomous mode or in a driver-controlled mode.

The autonomous control unit may represent a control system configured to identify, evaluate, and avoid or otherwise negotiate potential obstacles in the environment of the autonomous vehicle 105. In general, the autonomous control unit may be configured to control the autonomous vehicle 105 for operation without a driver or to provide driver assistance in controlling the autonomous vehicle 105. In some embodiments, the autonomous control unit may be configured to incorporate data from the GPS device, the RADAR, the LiDAR (i.e. LIDAR), the cameras, and/or other vehicle subsystems to determine the driving path or trajectory for the autonomous vehicle 105. The autonomous control that may activate systems that the autonomous vehicle 105 has which are not present in a conventional vehicle, including those systems which can allow an autonomous vehicle to communicate with surrounding drivers or signal surrounding vehicles or drivers for safe operation of the autonomous vehicle.

An in-vehicle control computer 150, which may be referred to as a VCU, includes a vehicle subsystem interface 160, a driving operation module 168, one or more processors 170, a compliance module 166, a memory 175, and a network communications subsystem 178. This in-vehicle control computer 150 controls many, if not all, of the operations of the autonomous vehicle 105 in response to information from the various vehicle subsystems 140. The one or more processors 170 execute the operations that allow the system to determine the health of the autonomous vehicle, such as whether the autonomous vehicle has a malfunction or has encountered a situation requiring service or a deviation from normal operation and giving instructions. Data from the vehicle sensor subsystems 144 is provided to VCU 150 so that the determination of the status of the autonomous vehicle can be made. The compliance module 166 determines what action should be taken by the autonomous vehicle 105 to operate according to the applicable (i.e. local) regulations. Data from other vehicle sensor subsystems 144 may be provided to the compliance module 166 so that the best course of action in light of the AV's status may be appropriately determined and performed. Alternatively, or additionally, the compliance module 166 may determine the course of action in conjunction with another operational or control module, such as the driving operation module 168.

The memory 175 may contain additional instructions as well, including instructions to transmit data to, receive data from, interact with, or control one or more of the vehicle drive subsystem 142, the vehicle sensor subsystem 144, and the vehicle control subsystem 146 including the autonomous Control system. The in-vehicle control computer (VCU) 150 may control the function of the autonomous vehicle 105 based on inputs received from various vehicle subsystems (e.g., the vehicle drive subsystem 142, the vehicle sensor subsystem 144, and the vehicle control subsystem 146). Additionally, the VCU 150 may send information to the vehicle control subsystems 146 to direct the trajectory, velocity, signaling behaviors, and the like, of the autonomous vehicle 105. The autonomous control vehicle control subsystem may receive a course of action to be taken from the compliance module 166 of the VCU 150 and consequently relay instructions to other subsystems to execute the course of action.

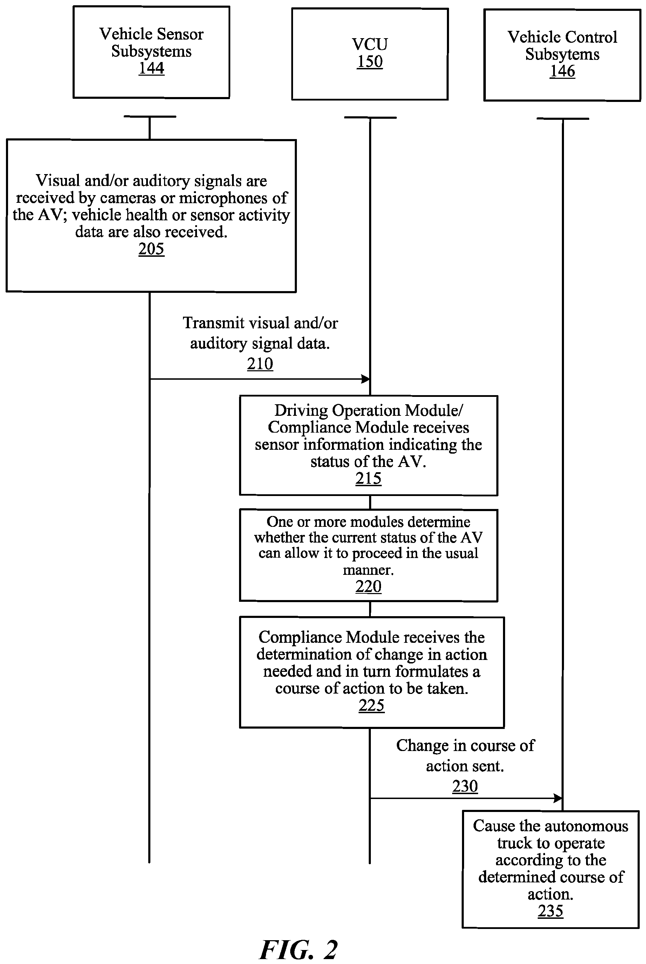

FIG. 2 shows a flow diagram for operation of an autonomous vehicle (AV) safely in light of the health and surroundings of the AV. Although this figure depicts functional steps in a particular order for purposes of illustration, the process is not limited to any particular order or arrangement of steps. One skilled in the relevant art will appreciate that the various steps portrayed in this figure could be omitted, rearranged, combined and/or adapted in various ways.

As shown in FIG. 2, the vehicle sensor subsystem 144 receives visual, auditory, or both visual and auditory signals indicating the at the environmental condition of the AV, as well as vehicle health or sensor activity data are received in step 205. These visual and/or auditory signal data are transmitted from the vehicle sensor subsystem 144 to the in-vehicle control computer system (VCU) 150, as in step 210. Any of the driving operation module and the compliance module receive the data transmitted from the vehicle sensor subsystem, in step 215. Then, one or both of those modules determine whether the current status of the AV can allow it to proceed in the usual manner or that the AV needs to alter its course to prevent damage or injury or to allow for service in step 220. The information indicating that a change to the course of the AV is needed may include an indicator of sensor malfunction; an indicator of a malfunction in the engine, brakes, or other components necessary for the operation of the autonomous vehicle; a determination of a visual instruction from authorities such as flares, cones, or signage; a determination of authority personnel present on the roadway; a determination of a law enforcement vehicle on the roadway approaching the autonomous vehicle, including from which direction; and a determination of a law enforcement or first responder vehicle moving away from or on a separate roadway from the autonomous vehicle. This information indicating that a change to the AV's course of action is needed may be used by the compliance module to formulate a new course of action to be taken which accounts for the AV's health and surroundings, in step 225. The course of action to be taken may include slowing, stopping, moving into a shoulder, changing route, changing lane while staying on the same general route, and the like. The course of action to be taken may include initiating communications with any oversight or human interaction systems present on the autonomous vehicle. The course of action to be taken may then be transmitted from the VCU 150 to the autonomous control system, in step 230. The vehicle control subsystems 146 then cause the autonomous vehicle 105 to operate in accordance with the course of action to be taken that was received from the VCU 150 in step 235.

It should be understood that the specific order or hierarchy of steps in the processes disclosed herein is an example of exemplary approaches. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

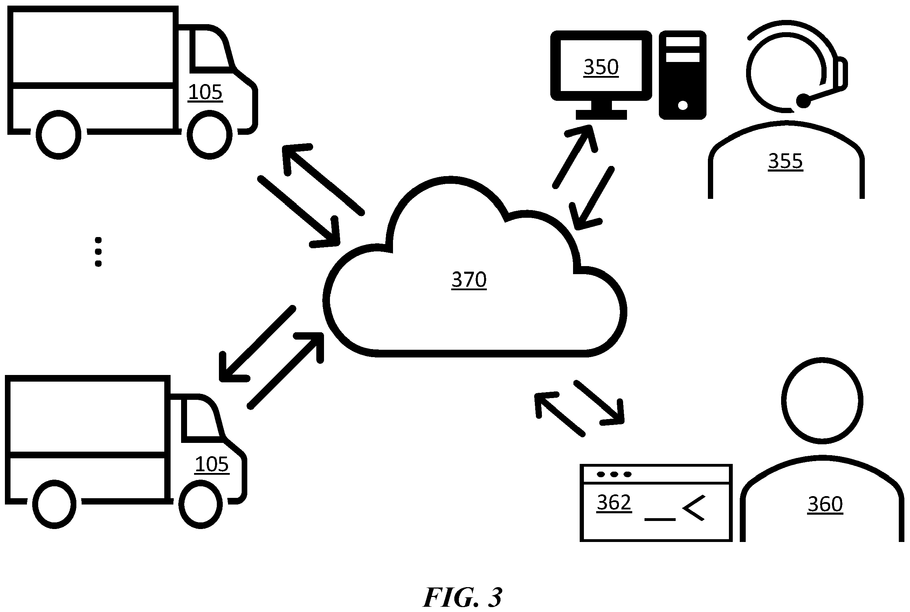

FIG. 3 illustrates a system 300 that includes one or more autonomous vehicles 105, a control center or oversight system 350 with a human operator 355, and an interface 362 for third-party 360 interactions. A human operator 355 may also be known as a remoter center operator (RCO). Communications between the autonomous vehicles 105, oversight system 350 and user interface 362 take place over a network 370. In some instances, where not all the autonomous vehicles 105 in a fleet are able to communicate with the oversight system 350, the autonomous vehicles 105 may communicate with each other over the network 370 or directly. As described with respect to FIG. 1, the VCU 150 of each autonomous vehicle 105 may include a module for network communications 178.

The one or more autonomous vehicles 105 may be in communication with the oversight system 350. The oversight system 350 may serve many purposes, including: tracking the progress of one or more autonomous vehicles (e.g., an autonomous truck); tracking the progress of a fleet of autonomous vehicles; sending maneuvering instructions to one or more autonomous vehicles; monitoring the health of the autonomous vehicle(s); monitoring the status of the cargo of each autonomous vehicle in contact with the oversight system; facilitate communications between third parties (e.g., law enforcement, clients whose cargo is being carried) and each, or a specific, autonomous vehicle; allow for tracking of specific autonomous trucks in communication with the oversight system (e.g., third-party tracking of a subset of vehicles in a fleet); arranging maintenance service for the autonomous vehicles (e.g., oil changing, fueling, maintaining the levels of other fluids); alerting an affected autonomous vehicle of changes in traffic or weather that may adversely impact a route or delivery plan; pushing over the air updates to autonomous trucks to keep all components up to date; and other purposes or functions that improve the safety for the autonomous vehicle, its cargo, and its surroundings. The oversight system 350 may also determine performance parameters of an autonomous vehicle or autonomous truck, including any of: data logging frequency, compression rate, location, data type; communication prioritization; how frequently to service the autonomous vehicle (e.g., how many miles between services); when to perform a minimal risk condition (MRC) maneuver while monitoring the vehicle's progress during the maneuver; when to hand over control of the autonomous vehicle to a human driver (e.g., at a destination yard); ensuring an autonomous vehicle passes pre-trip inspection; ensuring an autonomous vehicle performs or conforms to legal requirements at checkpoints and weight stations; ensuring an autonomous vehicle performs or conforms to instructions from a human at the site of a roadblock, cross-walk, intersection, construction, or accident; and the like.

To allow for communication between the one or more autonomous vehicles 105 in a fleet and the oversight system 350 or command center, each of the one or more autonomous vehicles 105 may be equipped with a communication gateway. The communication gateway may have the ability to do any of the following: allow for AV to oversight system communication (i.e. V2C) and the oversight system to AV communication (C2V); allow for AV to AV communication within the fleet (V2V); transmit the availability or status of the communication gateway; acknowledge received communications; ensure security around remote commands between the AV and the oversight system; convey the AV's location reliably at set time intervals; enable the oversight system to ping the AV for location and vehicle health status; allow for streaming of various sensor data directly to the command or oversight system; allow for automated alerts between the AV and oversight system; comply to ISO 21434 standards; and the like.

The oversight system 350 or command center may be operated by one or more human, also known as an operator or an RCO. The operator may set thresholds for autonomous vehicle health parameters, so that when an autonomous vehicle meets or exceeds the threshold, precautionary action may be taken. Examples of vehicle health parameters for which thresholds may be established by an operator may include any of: fuel levels; oil levels; miles traveled since last maintenance; low tire-pressure detected; cleaning fluid levels; brake fluid levels; responsiveness of steering and braking subsystems; Diesel exhaust fluid (DEF) level; communication ability (e.g., lack of responsiveness); positioning sensors ability (e.g., GPS, IMU malfunction); impact detection (e.g., vehicle collision); perception sensor ability (e.g., camera, LIDAR, radar, microphone array malfunction); computing resources ability (e.g., VCU or ECU malfunction or lack of responsiveness, temperature abnormalities in computing units); angle between a tractor and trailer in a towing situation (e.g., tractor-trailer, 18-wheeler, or semi-truck); unauthorized access by a living entity (e.g., a person or an animal) to the interior of an autonomous truck; and the like. The precautionary action may include execution of a minimal risk condition (MRC) maneuver, seeking service, or exiting a highway or other such re-routing that may be less taxing on the autonomous vehicle. An autonomous vehicle whose system health data meets or exceeds a threshold set at the oversight system or by the operator may receive instructions that are automatically sent from the oversight system to perform the precautionary action.

The operator may be made aware of situations affecting one or more autonomous vehicles in communication with or being monitored by the oversight system that the affected autonomous vehicle(s) may not be aware of. Such situations may include: irregular or sudden changes in traffic flow (e.g., traffic jam or accident); abrupt weather changes; abrupt changes in visibility; emergency conditions (e.g., fire, sink-hole, bridge failure); power outage affecting signal lights; unexpected road work; large or ambiguous road debris (e.g., object unidentifiable by the autonomous vehicle); law enforcement activity on the roadway (e.g., car chase or road clearing activity); and the like. These types of situations that may not be detectable by an autonomous vehicle may be brought to the attention of the oversight system operator through traffic reports, law enforcement communications, data from other vehicles that are in communication with the oversight system, reports from drivers of other vehicles in the area, and similar distributed information venues. An autonomous vehicle may not be able to detect such situations because of limitations of sensor systems or lack of access to the information distribution means (e.g., no direct communication with weather agency). An operator at the oversight system may push such information to affected autonomous vehicles that are in communication with the oversight system. The affected autonomous vehicles may proceed to alter their route, trajectory, or speed in response to the information pushed from the oversight system. In some instances, the information received by the oversight system may trigger a threshold condition indicating that MRC (minimal risk condition) maneuvers are warranted; alternatively, or additionally, an operator may evaluate a situation and determine that an affected autonomous vehicle should perform a MRC maneuver and subsequently send such instructions to the affected vehicle. In these cases, each autonomous vehicle receiving either information or instructions from the oversight system or the oversight system operator uses its on-board computing unit (i.e. VCU) to determine how to safely proceed, including performing a MRC maneuver that includes pulling-over or stopping.

The oversight system 350 or command center may allow a third party to interact with the oversight system operator, with an autonomous truck, or with both the human system operator and an autonomous truck. A third party may be a customer whose goods are being transported, a law enforcement or emergency services provider, or a person assisting the autonomous truck when service is needed.

Actions that an autonomous vehicle, particularly an autonomous truck, as described herein may be configured to execute to safely traverse a course while abiding by the applicable rules, laws, and regulations may include those actions successfully accomplished by an autonomous truck driven by a human. These actions, or maneuvers, may be described as features of the truck, in that these actions may be executable programming stored on the VCU 150 (i.e., the in-vehicle control computer unit). These actions or features may include those related to reactions to the detection of certain types of conditions or objects such as: appropriate motion in response to detection of an emergency vehicle with flashing lights; appropriate motion in response to detecting one or more vehicles approaching the AV, motions or actions in response to encountering an intersection; execution of a merge into traffic in an adjacent lane or area of traffic; detection of need to clean one or more sensor and the cleaning of the appropriate sensor; and the like. Other features of an autonomous truck may include those actions or features which are needed for any type of maneuvering, including that needed to accomplish the features or actions that are reactionary, listed above. Such features, which may be considered supporting features, may include: the ability to maintain an appropriate following distance; the ability to turn right and left with appropriate signaling and motion, and the like. These supporting features, as well as the reactionary features listed above, may include controlling or altering the steering, engine power output, brakes, or other vehicle control subsystems 146.

### AV Cargo Verification System

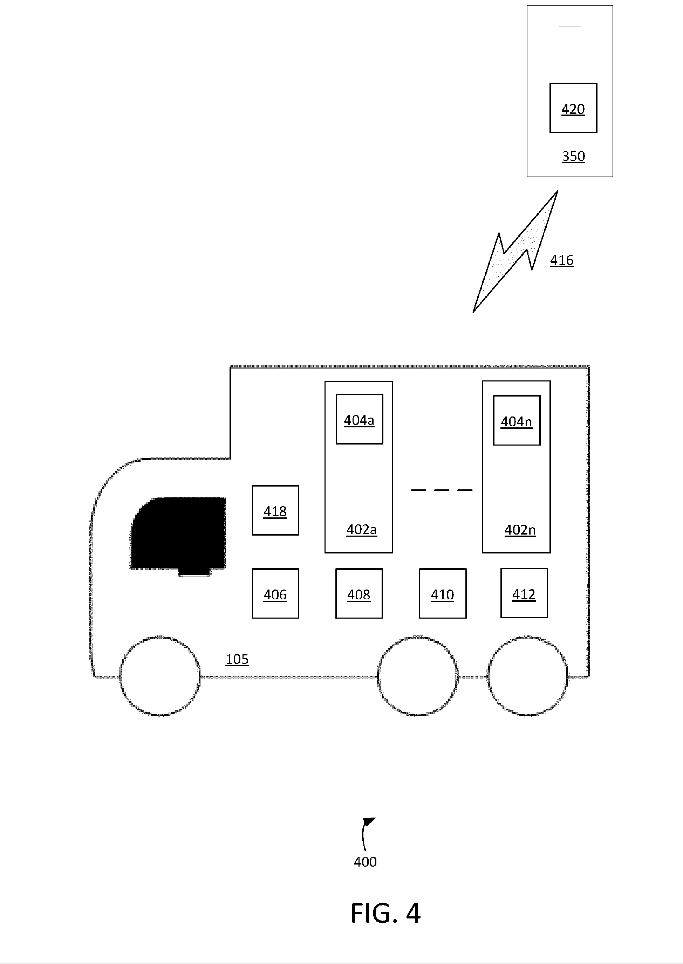

FIG. 4 illustrates an AV cargo verification system 400, in accordance with an exemplary embodiment of the present disclosure. The AV cargo verification system 400 may include the autonomous vehicle 105, the oversight system 350, and/or any other components. The autonomous vehicle 105 may be in communication 416 with the oversight system 350 during its journey. The autonomous vehicle 105 may include one or more vehicle doors 402a to 402n as shown, one or more door seals 404a to 402n attached to the one or more vehicle doors 402a to 402n, a vehicle speed sensor 406, a vehicle weight sensor 408, a transceiver 410, a processing unit 412, a navigation device 418, and/or any other components. The oversight system 350 may include a first storage medium 420, and/or any other components.

The one or more door seals 404a to n may be referred to as a component used to secure a cargo container of the autonomous vehicle 105. Examples of the one or more door seals 404a to 404n include a metal band cargo seal, a plastic band cargo seal, a plastic adjustable cargo seal, a cable security seal, a bolt security seal, a plastic padlock seal, a pallet seal, a barrier cargo seal, and/or any other types of door seal. In some embodiments, the one or more door seals 404a to 404n are designed to be used one-time based on broken seal concept. In some embodiments, the one or more door seals 404a to 404n may be associated with one or more seal unique identification (ID) numbers.

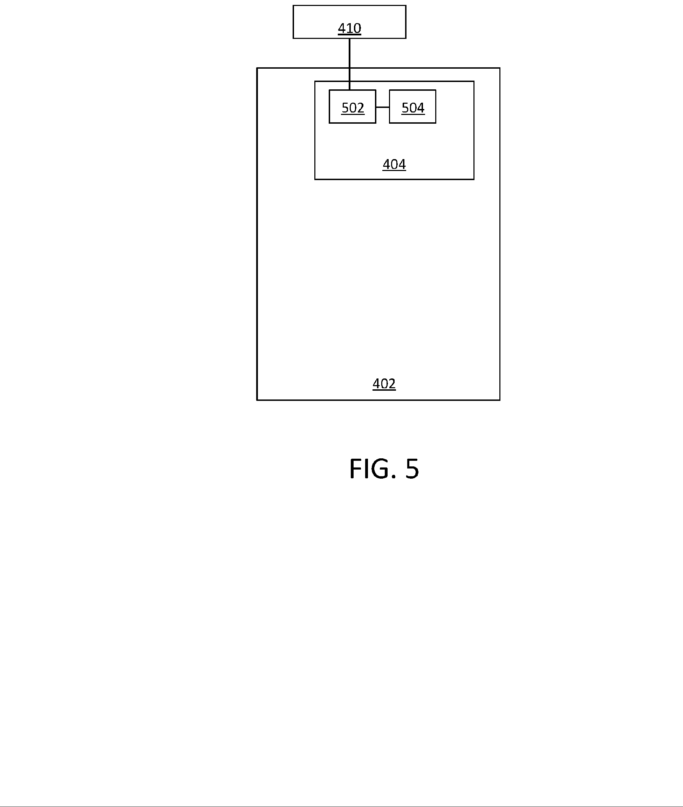

In some embodiments, the one or more seal unique ID numbers are printed on the one or more door seals 404a to 404n. In some other embodiments, the one or more seal unique ID numbers are digitally stored in the one or more door seals 404a to 404n. For example, referring to FIG. 5, the door seal 404 comprises a second storage medium 502 and a seal sensor 504. The second storage medium 502 may be configured to store the seal unique ID number associated with the door seal 404. The seal sensor 504 may be referred to a device configured to provide a first status signal corresponding to status of the door seal 404. In some embodiments, the first status signal indicates whether an open operation is performed on the door seal 404 attached to the vehicle door 402. The first status signal may be transmitted from the seal sensor 504 to the second storage medium 502. The second storage medium 502 may be then configured to transmit the first status signal associated with the seal unique ID number to the transceiver 410, and then to the oversight system 350 for further verification. In one example, upon receiving the first status signal and the associated seal unique ID numbers, the RCO at the oversight system 350 verifies whether an unauthorized vehicle door open operation is performed. In another example, the storage medium 420 is configured to store the seal unique ID number associated with the door seal 404. The oversight system 350 may be then configured to compare the stored seal unique ID number with the received seal unique ID number from the transceiver 410 for detecting seal tampering activities.

Referring back to FIG. 4, the navigation device 418 may be configured to transmit a real-time geographic location of the autonomous vehicle 105 to the transceiver 410, and the vehicle speed sensor 406 may be configured to transmit a real-time speed value of the autonomous vehicle 105 to the transceiver 410. The real-time geographic location of the autonomous vehicle 105 may be determined by at least one of the following parameters: longitude and latitude, ellipsoid point, ellipsoid point with uncertainty circle, ellipsoid point with uncertainty ellipse, ellipsoid point with altitude, ellipsoid point with altitude and uncertainty ellipsoid, ellipsoid arc, polygon, horizontal velocity, GNSS (Global Navigation Satellite System) positioning information.

The transceiver 410 may be configured to transmit the real-time geographic location and speed of the autonomous vehicle 105 to the oversight system 350 at a predetermined location/speed transmission frequency. In one example, the transceiver 410 transmits the real-time geographic location and speed of the autonomous vehicle 105 every second. In another example, the predetermined location/speed transmission frequency is time-variant. Upon receiving the real-time geographic location and speed of the autonomous vehicle 105, the oversight system 350 may be configured to determine whether an unauthorized stop event occurs at the autonomous vehicle 105.

In some examples, the first storage medium 420 is configured to store a set of predetermined speed threshold values at a set of predetermined geographic locations corresponding to a predetermined trajectory of the autonomous vehicle 105. Upon receiving the real-time geographic location and speed of the autonomous vehicle 105 from the transceiver 410, the oversight system 350 may be configured to compare the real-time speed of the autonomous vehicle 105 to the predetermined speed threshold value at the corresponding real-time geographic location. If the real-time speed of the autonomous vehicle 105 is less than the predetermined speed threshold value, then an unauthorized stop event is detected. Table 1 illustrates an example of unauthorized stop detection at the oversight system 350. As can be seen, for a specific predetermined geographic location such as (x3, y3), the oversight system 350 compares the predetermined speed value v3' to the real-time speed value v3. If v3 is less than v3', then an unauthorized stop event is detected for the geographic location (x3, y3).

In some embodiments, an unauthorized stop event is detected if the predetermined speed value is less than the real-time speed value for at least a predetermined period of time. In one example, the predetermined period of time is 1 minute. In this example, if the predetermined speed value is less than the real-time speed value for at least 1 minute, then an authorized stop event is detected.

**Table 1. An example of unauthorized stop detection at the oversight system 350.**

| Geographic location (latitude, longitude) | Predetermined speed threshold value | Real-time speed value | Unauthorized stop? |
|---|---|---|---|
| (*x*1, *y*1) | *v*1' | *v*1 | No |
| (*x*2, *y*2) | *v*2' | v2 | No |
| (*x*3, *y*3) | v3' | v3 | Yes |
| ⋮ | | ⋮ | ⋮ |
| (*xn, yn*) | *vn'* | *vn* | No |

In some circumstances, the set of predetermined speed threshold values may be dynamically adjusted based on real-time traffic flow corresponding to the set of predetermined geographic locations. That is, column 2 of Table 1 can be dynamically adjusted based on real-time traffic flow. A traffic flow may be referr to a number of vehicles that pass by a geographic location in a given time period. In one example, the predetermined speed threshold value corresponding to a specific geographic location is increased when the traffic flow becomes higher. In another example, a traffic jam may result in a complete traffic stop. In such a case, the predetermined speed threshold value may be set to 0 to reflect the current traffic flow.

The vehicle weight sensor 408 may be configured to measure a cargo weight value in the autonomous vehicle 105. In some embodiments, the vehicle weight sensor 408 is configured to transmit the cargo weight value at real time to the transceiver 410, and the transceiver 410 can be configured to transmit the cargo weight value to the oversight system 350 at a predetermined weight value transmission frequency. In one example, the transceiver 410 transmits the cargo weight value to the oversight system 350 every second. In another example, the predetermined weight value transmission frequency is time-variant. Upon receiving the cargo weight value, the oversight system 350 may be configured to detect cargo weight changes in the autonomous vehicle 105.

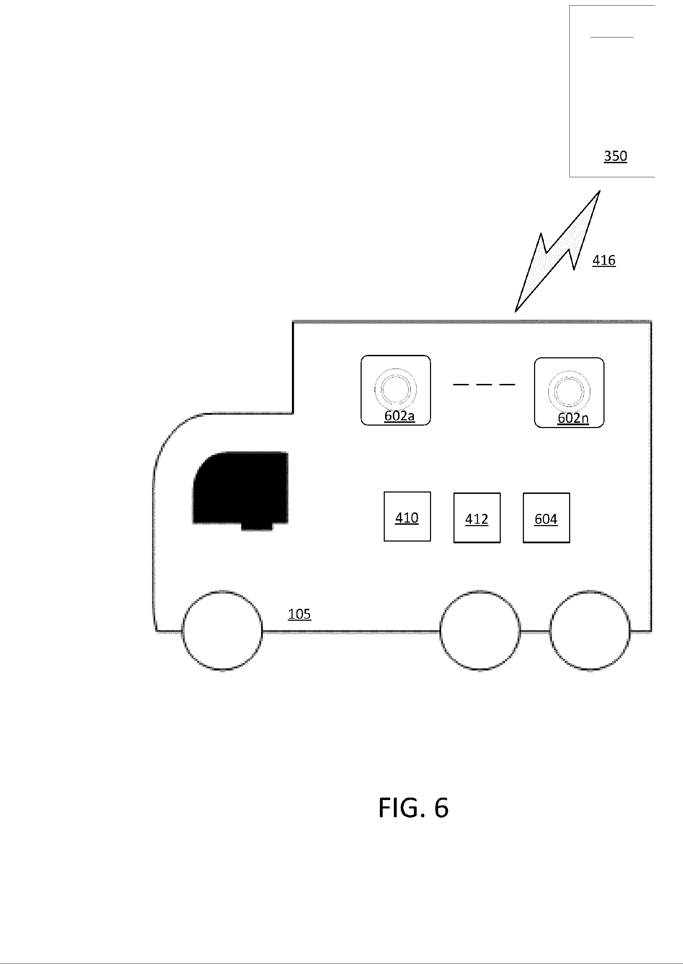

FIG. 6 illustrates another embodiment of the AV cargo verification system 400 in accordance with the present disclosure. In this embodiment, the AV cargo verification system 400 comprises the autonomous vehicle 105, the oversight system 350, one or more cameras 602a to 602n mounted on the autonomous vehicle 105, and/or any other components. The one or more cameras 602a to 602n may be positioned to capture imagery data comprising scenes inside and outside of the autonomous vehicle 105.

In one example, the oversight system 350 sends a first feedback signal to the one or more cameras 602a to 602n through the transceiver 410. In this example, the first feedback signal comprises a control signal to turn on the one or more cameras 602a to 602n. In some embodiments, the first feedback signal is sent to the one or more cameras 602a to 602n if at least one of the following conditions is met at the oversight system 350: 1) an unauthorized vehicle door open operation is detected, 2) a seal tempering activity is detected by receiving an incorrect seal unique ID number, 3) an unauthorized stop event is detected, and 4) a cargo weight value change is detected.

Upon receiving the first feedback signal from the oversight system 350, the one or more cameras 602a to 602n may be configured to capture imagery data comprising scenes inside and/or outside of the autonomous vehicle 105. In some embodiments, the autonomous vehicle 105 comprises a third storage medium 604 to store the imagery data received from the one or more cameras 602a to 602n. The imagery data may be then transmitted back to the oversight system 350 through the transceiver 410 for further processing. Upon receiving the imagery data at the oversight system 350, the RCO may verify the imagery data to determine whether a safety issue occurs within and/or outside the autonomous vehicle 105. In one example, the RCO determines a safety issue occurs by observing an unauthorized break-in in a cargo container of the autonomous vehicle 105. In another example, a safety issue is detected using a computer vision algorithm implemented at the oversight system 350.

When a safety issue is determined, the oversight system 350 may be configured to send a second feedback signal to the autonomous vehicle 105. In some embodiments, the second feedback signal comprises a pull over request for the autonomous vehicle 105. The second feedback signal may be transmitted from the oversight system 350 to the transceiver 410, and then from the transceiver 410 to the processing unit 412 of the autonomous vehicle 105. The processing unit 412 may be configured to control the autonomous vehicle 105 by sending vehicle control commands to appropriate parts of the autonomous vehicle 105. Examples of vehicle control commands include accelerate, decelerate, turn left/right, brake, reverse, pull over, and/or any other commands. Upon receiving the pull over request from the transceiver 410, the processing unit 412 may be configured to send a pull over command to the autonomous vehicle 105. When the autonomous vehicle 105 pulls over, the transceiver 410 may be configured to receive a pull over geographic location from the navigation device 418 and send the pull over geographic location to the oversight system 350, such that the oversight system 350 may assign a rescue team to come to the pull over geographic location for further verification.

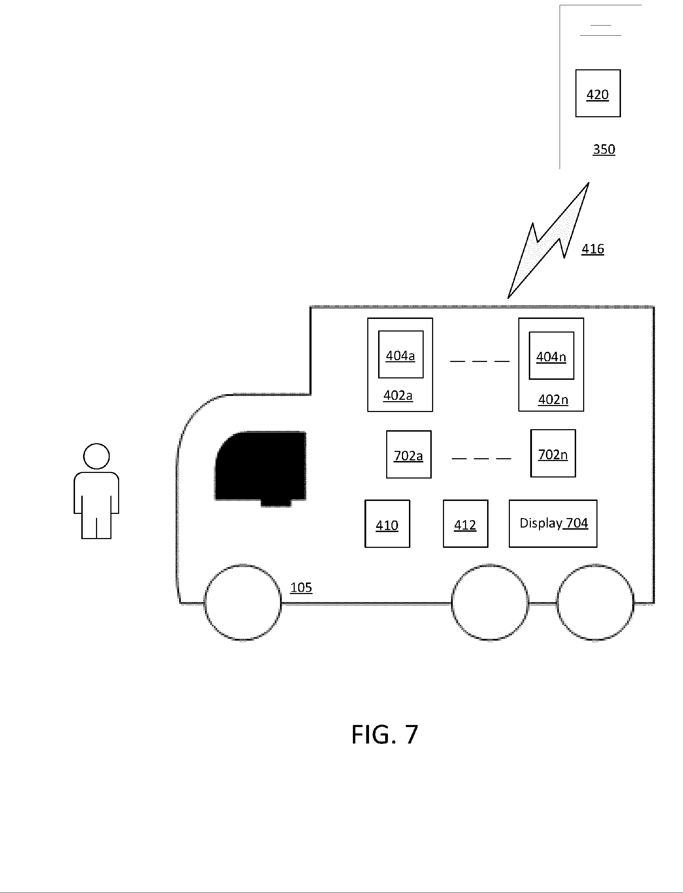

FIG. 7 illustrates yet another embodiment of the AV cargo verification system 400 in accordance with the present disclosure. In this embodiment, the AV cargo verification system 400 comprises the autonomous vehicle 105, the oversight system 350, and/or any other components, and the autonomous vehicle 105 comprises the one or more door seals 404a to 404n attached to the one or more vehicle doors 402a to 402n, the transceiver 410, the processing unit 412, one or more cargoes 702a to 702n, a display 704 mounted on the autonomous vehicle 105, and/or any other components. In some cases, the display 704 may be an example of a Liquid Crystal Display (LCD), an LED display, or another High Definition (HD) display.

The transceiver 410 may be configured to receive a plurality of checklists from the oversight system 350. In some embodiments, the plurality of checklists comprises a bill of lading issued by a common carrier to acknowledge receipt of cargo for shipment. In some other embodiments, the plurality of checklists comprises a trailer inspection checklist including brake check, tire check, hour meter check, and/or other check items for the autonomous vehicle 105. In still some other embodiments, the plurality of checklists comprises a first checklist comprising the one or more cargoes 702a to 702n, and a second checklist comprising the one or more seal unique ID numbers associated with the one or more vehicle doors 402a to 402n. The first checklist may be determined at the oversight system 350 according to up-to-date cargo information associated with the autonomous vehicle 105. In some examples, the first checklist comprises cargo names, prices, weights, the number of total items, a weight distribution (i.e., how much weight is associated with each axle), any temperature limitations, indication of whether there are any other special handling conditions that need to be indicated on the exterior of the vehicle (e.g., oxidizer, flammable), or other key product information such as product specification, nutrition information and/or ingredients (if applicable), or even a product image. In some embodiments, the first checklist is verified by a human operator prior to a delivery trip/mission.

Upon receiving the first checklist from the oversight system 350, the transceiver 410 may be configured to transmit the first checklist to the display 704. In one example, the first checklist is provided to the display 704 via a user interface using a handheld device such as a tablet. In another example, the display 704 comprises a touch screen to display the one or more cargoes 702a to 702n on the first checklist, and an on-site operator may verify the one or more cargoes 702a to 702n based on the first checklist. Upon verification, the on-site operator may validate the one or more cargoes 702a to 702n by checking appropriate buttons on the touch screen of the display 704. The display 704 may be then configured to send a first validation signal to the transceiver 410 if all the one or more cargoes 702a to 702n from the first checklist are validated by the on-site operator. The transceiver 410 may be then configured to send the first validation signal to the oversight system 350 for further processing.

The second checklist may be determined at the oversight system 350 based on stored seal information for the autonomous vehicle 105 at the oversight system 350. Upon receiving the second checklist from the oversight system 350, the transceiver 410 may be configured to transmit the second checklist to the display 704. In some embodiments, the display 704 comprises a touch screen to display the one or more seal unique ID numbers associated with the one or more vehicle doors 402a to 402n. In one example, the on-site operator verifies seal numbers by comparing the one or more seal unique ID numbers displayed at the display 704 and the one or more seal unique ID numbers printed on the one or more door seals 404a to 404n. In another example, the on-site operator scans Radio Frequency Identification (RFID) tags attached to the one or more door seals 404a to 404n with an electronic scanning device to verify seal numbers. An electronic scanning device may be referred to an electronic device which scans images or barcodes and converts the scanned images or barcodes to digital form for manipulation. In this example, the RFID tags attached to the one or more door seals 404a to 404n comprise the one or more seal unique ID numbers. Upon verification, the on-site operator may validate the second checklist by checking appropriate buttons on the touch screen of the display 704. The display 704 may be then configured to send a second validation signal to the transceiver 410 if all the one or more seal unique ID numbers from the second checklist are validated by the on-site operator. The transceiver 410 may be then configured to send the second validation signal to the oversight system 350 for further processing.

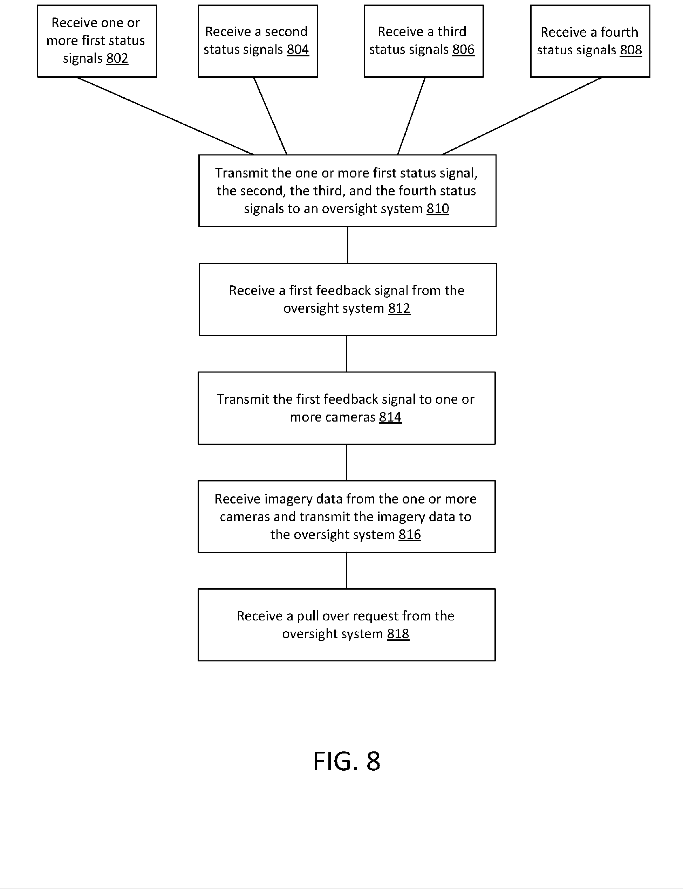

FIG. 8 illustrates an example method 800 for operating an AV in the system 100. The operations of method 800 presented below are intended to be illustrative. In some embodiments, method 800 may be accomplished with one or more additional operations not described and/or without one or more of the operations discussed. Additionally, the order in which the operations of method 800 are illustrated in FIG. 8 and described below is not intended to be limiting.

At step 802, one or more first status signals are received in the AV at the system 100. In some embodiments, the one or more first status signals comprise one or more seal unique ID numbers associated with one or more door seals attached to one or more vehicle doors of the AV in the system 100.

At step 804, a second status signal is received in the autonomous vehicle. In some embodiments, the second status signal comprises a speed value of the AV determined by a vehicle status sensor in the autonomous vehicle.

At step 806, a third status signal is received in the autonomous vehicle. In some embodiments, the third status signal comprises a geographic location of the AV determined by a navigation device in the autonomous vehicle.

At step 808, a fourth status signal is received in the autonomous vehicle. In some embodiments, the fourth status signal comprises a weight value of cargoes in the AV determined by a vehicle weight sensor.

At step 810, the one or more first status signals, the second status signal, the third status signal, and the fourth status signal are transmitted from the AV to an oversight system for further processing. In some examples, the AV comprises a transceiver for transmitting signals from the AV to the oversight system.

At step 812, a first feedback signal is received in the AV from the oversight system. In some embodiments, the first feedback signal comprises a control signal to turn on one or more cameras mounted on the autonomous vehicle, and is received if an unauthorized vehicle door open operation is detected based on the one or more first status signals, a seal tampering activity is detected based on the one or more first status signals, an unauthorized stop event is detected based on the second status signal and the third status signal, or a cargo weight value change is detected based on the fourth status signal.

At step 814, the first feedback signal is transmitted to the one or more cameras mounted on the autonomous vehicle. In some embodiments, the transceiver in the AV receives the first feedback signal from the oversight system, and transmits the first feedback signal to the one or more cameras. Upon receiving the first feedback signal, the one or more cameras may be configured to capture imagery data.

At step 816, the captured imagery data from the one or more cameras are transmitted to the transceiver in the autonomous vehicle, and then from the transceiver in the AV to the oversight system for further processing. In some embodiments, the imagery data comprise scenes inside and outside of the AV. In some other embodiments, a remote center operator at the oversight system verifies the imagery data and determines whether to send a pull over request to the AV.

At step 818, a pull over request is received at the transceiver in the AV from the oversight system. In some embodiments, upon receiving the pull over request, the transceiver transmits the pull over request to a processing unit, and the processing unit transmits a pull over command to the AV. When the AV pulls over, the transceiver may be configured to receive a pull over geographic location from the navigation device and send the pull over geographic location to the oversight system, such that the oversight system may assign a rescue team to come to the pull over geographic location for further verification.

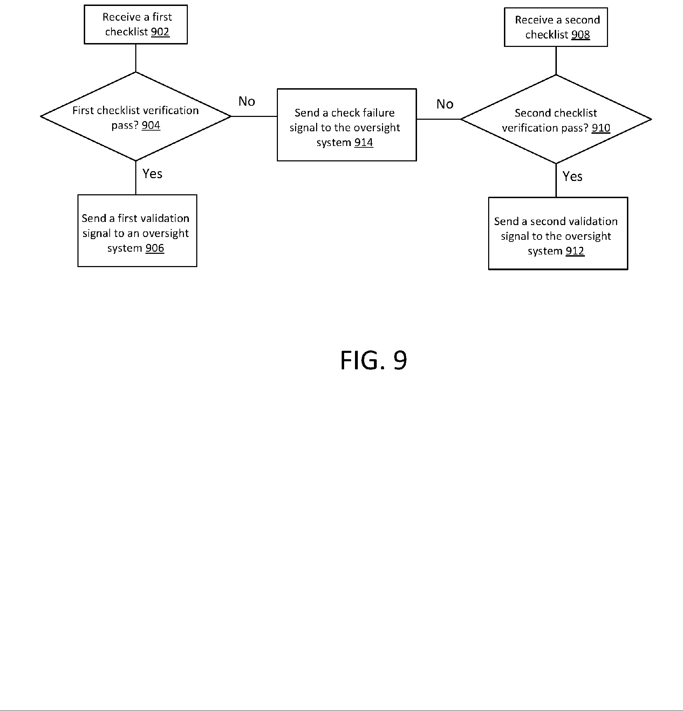

FIG. 9 illustrates another example method 900 for operating an AV in the system 100. The operations of method 900 presented below are intended to be illustrative. In some embodiments, method 900 may be accomplished with one or more additional operations not described and/or without one or more of the operations discussed. Additionally, the order in which the operations of method 900 are illustrated in FIG. 9 and described below is not intended to be limiting.

At step 902, a first checklist is received at the AV from an oversight system. In some embodiments, the first checklist comprises cargo names, prices, or other key product information such as product specification, nutrition information and/or ingredients (if applicable), or even a product image.

At step 904, the first checklist is verified by comparing items on the first checklist to actual cargoes in the autonomous vehicle. In some embodiments, an on-site operator checks the actual cargoes in the AV and verifies the items on the first checklist.

At step 906, if the items on the first checklist matches the actual cargoes in the autonomous vehicle, a first validation signal is generated and sent to the autonomous vehicle. In some embodiments, the on-site operator uses a touch screen of a display mounted on the AV to validate the items on the first checklist and send the first validation signal to the oversight system.

At step 908, a second checklist is received at the AV from the oversight system. In some embodiments, the second checklist comprises one or more seal unique ID numbers associated with one or more vehicle doors in the autonomous vehicle.

At step 910, the second checklist is verified. In one example, the on-site operator verifies the second checklist by comparing the one or more seal unique ID numbers on the second checklist to the one or more seal unique ID numbers printed on the door seals of the one or more vehicle doors. In another example, the on-site operator verifies the second checklist by scanning RFID tags attached to the door seals of the one or more vehicle doors using an electronic scanning device.

At step 912, if verification of the second checklist is successful, a second validation signal is generated and sent to the autonomous vehicle. In some embodiments, the on-site operator uses the touch screen of the display mounted on the AV to validate the second checklist and send the second validation signal to the oversight system.

At step 914, if verification of the first checklist at step 904 or verification of the second checklist at step 910 fails, a check failure signal is generated and sent to the oversight system for further processing. In some embodiments, the on-site operator uses the touch screen of the display mounted on the AV to send the check failure signal to the oversight system. Upon receiving the check failure signal, the oversight system can initiate one or more remedial procedures.

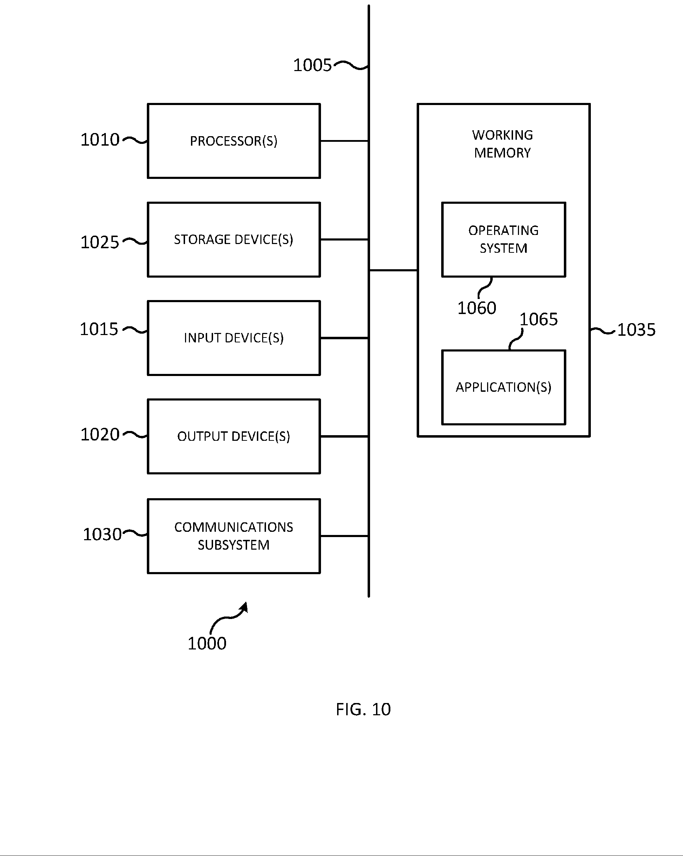

FIG. 10 illustrates a simplified computer system that can be used to implement various embodiments described and illustrated herein. A computer system 1000 as illustrated in FIG. 10 may be incorporated into devices such as a portable electronic device, mobile phone, or other device as described herein. FIG. 10 provides a schematic illustration of one embodiment of a computer system 1000 that can perform some or all of the steps of the methods provided by various embodiments. It should be noted that FIG. 10 is meant only to provide a generalized illustration of various components, any or all of which may be utilized as appropriate. FIG. 10, therefore, broadly illustrates how individual system elements may be implemented in a relatively separated or relatively more integrated manner.

The computer system 1000 is shown comprising hardware elements that can be electrically coupled via a bus 1005, or may otherwise be in communication, as appropriate. The hardware elements may include one or more processors 1010, including without limitation one or more general-purpose processors and/or one or more special-purpose processors such as digital signal processing chips, graphics acceleration processors, and/or the like; one or more input devices 1015, which can include without limitation a mouse, a keyboard, a camera, and/or the like; and one or more output devices 1020, which can include without limitation a display device, a printer, and/or the like.

The computer system 1000 may further include and/or be in communication with one or more non-transitory storage devices 1025, which can comprise, without limitation, local and/or network accessible storage, and/or can include, without limitation, a disk drive, a drive array, an optical storage device, a solid-state storage device, such as a random access memory ("RAM"), and/or a read-only memory ("ROM"), which can be programmable, flash-updateable, and/or the like. Such storage devices may be configured to implement any appropriate data stores, including without limitation, various file systems, database structures, and/or the like.

The computer system 1000 might also include a communications subsystem 1030, which can include without limitation a modem, a network card (wireless or wired), an infrared communication device, a wireless communication device, and/or a chipset such as a Bluetooth^{™} device, an 1002.11 device, a WiFi device, a WiMax device, cellular communication facilities, etc., and/or the like. The communications subsystem 1030 may include one or more input and/or output communication interfaces to permit data to be exchanged with a network such as the network described below to name one example, other computer systems, television, and/or any other devices described herein. Depending on the desired functionality and/or other implementation concerns, a portable electronic device or similar device may communicate image and/or other information via the communications subsystem 1030. In other embodiments, a portable electronic device, e.g., the first electronic device, may be incorporated into the computer system 1000, e.g., an electronic device as an input device 1015. In some embodiments, the computer system 1000 will further comprise a working memory 1035, which can include a RAM or ROM device, as described above.

The computer system 1000 also can include software elements, shown as being currently located within the working memory 1035, including an operating system 1060, device drivers, executable libraries, and/or other code, which may comprise computer programs provided by various embodiments, and/or may be designed to implement methods, and/or configure systems, provided by other embodiments, as described herein. Merely by way of example, one or more procedures described with respect to the methods discussed above, such as those described in relation to FIG. 8-9, might be implemented as code and/or instructions executable by a computer and/or a processor within a computer; in an aspect, then, such code and/or instructions can be used to configure and/or adapt a general purpose computer or other device to perform one or more operations in accordance with the described methods.

A set of these instructions and/or code may be stored on a non-transitory computer-readable storage medium, such as the storage device(s) 1025 described above. In some cases, the storage medium might be incorporated within a computer system, such as computer system 1000. In other embodiments, the storage medium might be separate from a computer system e.g., a removable medium, such as a compact disc, and/or provided in an installation package, such that the storage medium can be used to program, configure, and/or adapt a general-purpose computer with the instructions/code stored thereon. These instructions might take the form of executable code, which is executable by the computer system 1000 and/or might take the form of source and/or installable code, which, upon compilation and/or installation on the computer system 1000 e.g., using any of a variety of generally available compilers, installation programs, compression/decompression utilities, etc., then takes the form of executable code.

It will be apparent to those skilled in the art that substantial variations may be made in accordance with specific requirements. For example, customized hardware might also be used, and/or particular elements might be implemented in hardware, software including portable software, such as applets, etc., or both. Further, connection to other computing devices such as network input/output devices may be employed.

As mentioned above, in one aspect, some embodiments may employ a computer system such as the computer system 1000 to perform methods in accordance with various embodiments of the technology. According to a set of embodiments, some or all of the procedures of such methods are performed by the computer system 1000 in response to processor 1010 executing one or more sequences of one or more instructions, which might be incorporated into the operating system 1060 and/or other code contained in the working memory 1035. Such instructions may be read into the working memory 1035 from another computer-readable medium, such as one or more of the storage device(s) 1025. Merely by way of example, execution of the sequences of instructions contained in the working memory 1035 might cause the processor(s) 1010 to perform one or more procedures of the methods described herein. Additionally, or alternatively, portions of the methods described herein may be executed through specialized hardware.

The terms "machine-readable medium" and "computer-readable medium," as used herein, refer to any medium that participates in providing data that causes a machine to operate in a specific fashion. In an embodiment implemented using the computer system 1000, various computer-readable media might be involved in providing instructions/code to processor(s) 1010 for execution and/or might be used to store and/or carry such instructions/code. In many implementations, a computer-readable medium is a physical and/or tangible storage medium. Such a medium may take the form of a non-volatile media or volatile media. Non-volatile media include, for example, optical and/or magnetic disks, such as the storage device(s) 1025. Volatile media include, without limitation, dynamic memory, such as the working memory 1035.

Common forms of physical and/or tangible computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, EPROM, a FLASH-EPROM, any other memory chip or cartridge, or any other medium from which a computer can read instructions and/or code.

Various forms of computer-readable media may be involved in carrying one or more sequences of one or more instructions to the processor(s) 1010 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 1000.

The communications subsystem 1030 and/or components thereof generally will receive signals, and the bus 1005 then might carry the signals and/or the data, instructions, etc. carried by the signals to the working memory 1035, from which the processor(s) 1010 retrieves and executes the instructions. The instructions received by the working memory 1035 may optionally be stored on a non-transitory storage device 1025 either before or after execution by the processor(s) 1010.

While several embodiments have been provided in this disclosure, it should be understood that the disclosed systems and methods might be embodied in many other specific forms without departing from the spirit or scope of this disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of this disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein.

The following numbered items are disclosed herein:
1. A method for operating an autonomous vehicle, comprising:
   receiving one or more of the following: a first status signal, wherein the first status signal comprises a seal unique identification (ID) number associated with a door seal attached to a door of the autonomous vehicle; a second status signal comprising a speed value of the autonomous vehicle; a third status signal comprising a geographic location of the autonomous vehicle; a fourth status signal comprising a weight value of cargoes in the autonomous vehicle; transmitting the one or more of the first, second, third and fourth status signals to an oversight system;
   receiving a first feedback signal from the oversight system, wherein the first feedback signal is responsive to the one or more of the first, second, third and fourth status signals and comprises a control signal to turn on one or more cameras mounted on the autonomous vehicle.
2. The method of item 1, wherein the door seal further comprises a non-transient computer-readable storage medium to store the seal unique ID number.
3. The method of item 1, wherein the first status signal further comprises an indication of whether an open operation is performed on the door seal attached to the vehicle door.
4. The method of item 1, wherein the second status signal is determined by a vehicle speed sensor.
5. The method of item 1, further comprising receiving the first feedback signal if an unauthorized vehicle door open operation is detected based on the one or more first status signals.
6. The method of item 1, further comprising: transmitting the first feedback signal to the one or more cameras.
7. The method of item 1, further comprising: receiving imagery data from the one or more cameras, wherein the imagery data comprise scenes inside and outside of the autonomous vehicle; transmitting the imagery data to the oversight system; and
   receiving a second feedback signal from the oversight system, wherein the second feedback signal comprises a pull over request for the autonomous vehicle.
8. The method of item 1, further comprising: receiving a plurality of checklists from the oversight system, wherein the plurality of checklists comprises:
   a first checklist comprising key product information of the cargoes in the autonomous vehicle, wherein the key product information comprises names and prices of the cargoes;
   a second checklist comprising the one or more door seals with the one or more seal unique ID numbers associated with the one or more door seals.
9. The method of item 8, further comprising: performing verification of the first checklist; performing verification of the second checklist; receiving a first validation signal based on the verification of the first checklist; and receiving a second validation signal based on the verification of the second checklist.
10. The method of item 9, further comprising: transmitting the first validation signal to the oversight system; transmitting the second validation signal to the oversight system.
11. A system configured for operating an autonomous vehicle, wherein the system comprises: one or more hardware processors configured by machine-readable instructions to:
   receive one or more of the following: a first status signal, wherein the first status signal comprises a seal unique identification (ID) number associated with a door seal attached to a door of the autonomous vehicle; a second status signal comprising a speed value of the autonomous vehicle; a third status signal comprising a geographic location of the autonomous vehicle; a fourth status signal comprising a weight value of cargoes in the autonomous vehicle;
   transmit the one or more of the first, second, third and fourth status signals to an oversight system; receive a first feedback signal from the oversight system, wherein the first feedback signal is responsive to the one or more of the first, second, third and fourth status signals and comprises a control signal to turn on one or more cameras mounted on the autonomous vehicle.
12. The system of item 11, wherein the third status signal is determined by a navigation device.
13. The system of item 11, wherein the fourth status signal is determined by a vehicle weight sensor.
14. The system of item 11, wherein the one or more hardware processors are further configured by machine-readable instructions to receive the first feedback signal if a seal tempering activity is detected based on the one or more first status signals.
15. The system of item 11, wherein the one or more hardware processors are further configured by machine-readable instructions to receive the first feedback signal if an unauthorized stop event is detected based on the second status signal and the third status signal.
16. The system of item 11, wherein the one or more hardware processors are further configured by machine-readable instructions to receive the first feedback signal if a cargo weight value change is detected based on the fourth status signal.
17. The system of item 11, wherein the one or more hardware processors are further configured by machine-readable instructions to: receive a plurality of checklists from the oversight system, wherein the plurality of checklists comprises: a first checklist comprising key product information of the cargoes in the autonomous vehicle, wherein the key product information comprises names and prices of the cargoes; a second checklist comprising the one or more door seals with the one or more seal unique ID numbers associated with the one or more door seals.
18. The system of any preceding item, wherein the one or more hardware processors are further configured by machine-readable instructions to: perform verification of the first checklist; perform verification of the second checklist; receive a first validation signal based on the verification of the first checklist; receive a second validation signal based on the verification of the second checklist; transmit the first validation signal to the oversight system; and transmit the second validation signal to the oversight system.
18. The system of item 17, wherein the first checklist further comprises a weight distribution, wherein the weight distribution indicates an amounted of weight associated with each axle of the autonomous vehicle.
19. The system of item 17, wherein the first checklist further comprises one or more indications displayed on an exterior of the autonomous vehicle, wherein the one or more indications comprise special handling conditions for oxidizers and flammable objects.
20. A computer-readable storage medium having instructions embodied thereon, the instructions being executable by one or more processors to perform a method for operating an autonomous vehicle, the method comprising: receiving one or more of the following: a first status signal, wherein the first status signal comprises a seal unique identification (ID) number associated with a door seal attached to a door of the autonomous vehicle; a second status signal comprising a speed value of the autonomous vehicle; a third status signal comprising a geographic location of the autonomous vehicle; a fourth status signal comprising a weight value of cargoes in the autonomous vehicle; transmitting the one or more of the first, second, third and fourth status signals to an oversight system; receiving a first feedback signal from the oversight system, wherein the first feedback signal is responsive to the one or more of the first, second, third and fourth status signals and comprises a control signal to turn on one or more cameras mounted on the autonomous vehicle.
21. The computer-readable storage medium of item 20, the instructions being executable by the one or more processors to perform the method of any of items 1 to 10, and/or any of the methods or method steps disclosed herein.

## Claims

1. A method for operating an autonomous vehicle, comprising:
receiving one or more of the following: a first status signal, wherein the first status signal comprises a seal unique identification (ID) number associated with a door seal attached to a door of the autonomous vehicle; a second status signal comprising a speed value of the autonomous vehicle; a third status signal comprising a geographic location of the autonomous vehicle; a fourth status signal comprising a weight value of cargoes in the autonomous vehicle;
transmitting the one or more of the first, second, third and fourth status signals to an oversight system; and
receiving a first feedback signal from the oversight system, wherein the first feedback signal is responsive to the one or more of the first, second, third and fourth status signals and comprises a control signal to turn on one or more cameras mounted on the autonomous vehicle.

2. The method of claim 1, wherein the door seal further comprises a computer-readable storage medium to store the seal unique ID number.

3. The method of claim 1 or claim 2, wherein the first status signal further comprises an indication of whether an open operation is performed on the door seal attached to the vehicle door.

4. The method of any preceding claim, further comprising receiving the first feedback signal if an unauthorized vehicle door open operation is detected based on the one or more first status signals.

5. The method of any preceding claim, further comprising:
transmitting the first feedback signal to the one or more cameras.

6. The method of any preceding claim, further comprising:
receiving imagery data from the one or more cameras, wherein the imagery data comprise scenes inside and outside of the autonomous vehicle;
transmitting the imagery data to the oversight system;
receiving a second feedback signal from the oversight system, wherein the second feedback signal comprises a pull over request for the autonomous vehicle.

7. The method of any preceding claim, further comprising:
receiving a plurality of checklists from the oversight system, wherein the plurality of checklists comprises:
a first checklist comprising key product information of the cargoes in the autonomous vehicle, wherein the key product information comprises names and prices of the cargoes;
a second checklist comprising the one or more door seals with the one or more seal unique ID numbers associated with the one or more door seals.

8. The method of claim 7, further comprising:
performing verification of the first checklist;
performing verification of the second checklist;
receiving a first validation signal based on the verification of the first checklist; and
receiving a second validation signal based on the verification of the second checklist; and
optionally comprising:
transmitting the first validation signal to the oversight system;
transmitting the second validation signal to the oversight system.

9. A system configured for operating an autonomous vehicle, wherein the system comprises:
one or more hardware processors configured by machine-readable instructions to:
receive one or more of the following: a first status signal, wherein the first status signal comprises a seal unique identification (ID) number associated with a door seal attached to a door of the autonomous vehicle; a second status signal comprising a speed value of the autonomous vehicle; a third status signal comprising a geographic location of the autonomous vehicle; a fourth status signal comprising a weight value of cargoes in the autonomous vehicle;
transmit the one or more of the first, second, third and fourth status signals to an oversight system; and
receive a first feedback signal from the oversight system, wherein the first feedback signal is responsive to the one or more of the first, second, third and fourth status signals and comprises a control signal to turn on one or more cameras mounted on the autonomous vehicle.

10. The system of claim 9, wherein the third status signal is determined by a navigation device and/or wherein the fourth status signal is determined by a vehicle weight sensor.

11. The system of claim 9 or claim 10, wherein the one or more hardware processors are further configured by machine-readable instructions to receive the first feedback signal if:
a seal tempering activity is detected based on the one or more first status signals; and/or if an unauthorized stop event is detected based on the second status signal and the third status signal.

12. The system of any of claims 9 to 11, wherein the one or more hardware processors are further configured by machine-readable instructions to receive the first feedback signal if a cargo weight value change is detected based on the fourth status signal.

13. The system of any of claims 9 to 12, wherein the one or more hardware processors are further configured by machine-readable instructions to:
receive a plurality of checklists from the oversight system, wherein the plurality of checklists comprises:
a first checklist comprising key product information of the cargoes in the autonomous vehicle, wherein the key product information comprises names and prices of the cargoes;
a second checklist comprising the one or more door seals with the one or more seal unique ID numbers associated with the one or more door seals.
perform verification of the first checklist;
perform verification of the second checklist;
receive a first validation signal based on the verification of the first checklist;
receive a second validation signal based on the verification of the second checklist;
transmit the first validation signal to the oversight system; and
transmit the second validation signal to the oversight system.

14. The system of claim 13, wherein the first checklist further comprises:
a weight distribution, wherein the weight distribution indicates an amounted of weight associated with each axle of the autonomous vehicle; and/or
one or more indications displayed on an exterior of the autonomous vehicle, wherein the one or more indications comprise special handling conditions for oxidizers and flammable objects.

15. A computer-readable storage medium having instructions embodied thereon, the instructions being executable by one or more processors to perform the method of any of claims 1 to 8.
